# EUROPEAN PATENT APPLICATION

(11) **EP 4 231 250 A1**
(43) Date of publication of application: **23.08.2023**
(21) Application number: 22201062.1
(22) Date of filing: 12.10.2022
(51) Int. Cl.: G06V 20/52, G06V 40/20, G06Q 20/20, G07G 1/00, G07G 1/12

(54) **INFORMATION PROCESSING PROGRAM, INFORMATION PROCESSING METHOD, AND INFORMATION PROCESSING APPARATUS**

(30) Priority: 21.02.2022 JP 2022024851
(71) Applicant: FUJITSU LIMITED, Kawasaki-shi, Kanagawa 211-8588 (JP)
(72) Inventor: Jo, Yuka, Kawasaki-shi, Kanagawa, 211-8588 (JP); Suzuki, Genta, Kawasaki-shi, Kanagawa, 211-8588 (JP)
(74) Representative: Hoffmann Eitle

(57) **Abstract**

An information processing program causes a computer(10) to execute a process including, acquiring a video image in which an inside of a store in which each commodity product is arranged is captured,(S102) specifying a relationship between a plurality of persons who visit the inside of the store by analyzing the acquired video image in which the inside of the store is captured, (S104) grouping the plurality of persons when the specified relationship between the plurality of persons satisfies a predetermined condition, (S105) specifying, by analyzing the acquired video image in which the inside of the store is captured, a behavior exhibited with respect to the commodity product by each of the plurality of grouped persons,(S106) and associating the behavior exhibited with respect to the commodity product with a group to which the person who exhibits the behavior with respect to the commodity product belongs. (S107)

## Description

### FIELD

The embodiments discussed herein are related to an information processing program, an information processing method, and an information processing apparatus.

### BACKGROUND

Some efforts are being made to improve a conversion rate by analyzing what is called a purchase behavior, that is, a behavior indicated by a person who is visiting a retail store or the like when the person purchases a commodity product. For example, if, in a store that sells clothes, a person who compares commodity products less than five times is likely to purchase a commodity product, and, in contrast, a person who compares commodity products five times or more has is likely to leave without purchasing the commodity product, there is a possibility of improving the conversion rate by inducing the person to try on clothes less than five times at the time of providing a customer service.

Patent Document 1: Japanese Laid-open Patent Publication No. 2009-48430

However, in some cases, it is not able to correctly analyze a purchase behavior of a person in a case in which a plurality of persons cooperate with each other, such as in a case in which a person A who is a group customer tries on a commodity product and hands over the commodity product to a person B who belongs to the same group, and then, the person B exhibits a behavior.

Accordingly, it is an object in one aspect of an embodiment of the present invention to provide an information processing program, an information processing method, and an information processing apparatus capable of analyzing, with more accuracy, a behavior exhibited by a person who is visiting a store, in particular, behaviors exhibited by a plurality of persons included in a group.

### SUMMARY

According to an aspect of an embodiment, an information processing program causes a computer to execute a process including, acquiring a video image in which an inside of a store in which each commodity product is arranged is captured, specifying a relationship between a plurality of persons who visit the inside of the store by analyzing the acquired video image in which the inside of the store is captured, grouping the plurality of persons when the specified relationship between the plurality of persons satisfies a predetermined condition, specifying, by analyzing the acquired video image in which the inside of the store is captured, a behavior exhibited with respect to the commodity product by each of the plurality of grouped persons, and associating the behavior exhibited with respect to the commodity product with a group to which the person who exhibits the behavior with respect to the commodity product belongs.

### BRIEF DESCRIPTION OF DRAWINGS

FIG. 1 is a diagram illustrating a configuration example of an information processing system according to a first embodiment;
FIG. 2 is a diagram illustrating a configuration example of an information processing apparatus 10 according to the first embodiment;
FIG. 3 is a diagram illustrating an example of information stored in a camera installation DB 14 according to the first embodiment;
FIG. 4 is a diagram illustrating an example of information stored in a commodity product DB 15 according to the first embodiment;
FIG. 5 is a diagram illustrating an example of information stored in a person DB 16 according to the first embodiment;
FIG. 6 is a diagram illustrating tracking of a customer;
FIG. 7 is a diagram illustrating an example of extraction and tracking of a person from an in-store image according to the first embodiment;
FIG. 8 is a diagram illustrating an example of skeleton information;
FIG. 9 is a diagram illustrating pose determination of the entire body;
FIG. 10 is a diagram illustrating detection of a motion of each of parts;
FIG. 11 is a diagram illustrating an example of designation of an ROI according to the first embodiment;
FIG. 12 is a diagram illustrating an example of a purchase psychological process flow;
FIG. 13 is a diagram illustrating a process of specifying a reached behavior type according to the first embodiment;
FIG. 14 is a diagram illustrating an example of a grouping process performed on a plurality of persons according to the first embodiment;
FIG. 15 is a diagram illustrating a process of specifying a relationship obtained on the basis of HOID;
FIG. 16 is a diagram illustrating an example of determination of a store clerk according to the first embodiment;
FIG. 17 is a flowchart illustrating the flow of a grouping process according to the first embodiment; and
FIG. 18 is a diagram illustrating an example of a hardware configuration.

### DESCRIPTION OF EMBODIMENTS

Preferred embodiments of the present invention will be explained with reference to accompanying drawings. Furthermore, the present embodiment is not limited to the embodiments. In addition, each of the embodiments can be used in any appropriate combination as long as they do not conflict with each other.

### [a] First Embodiment

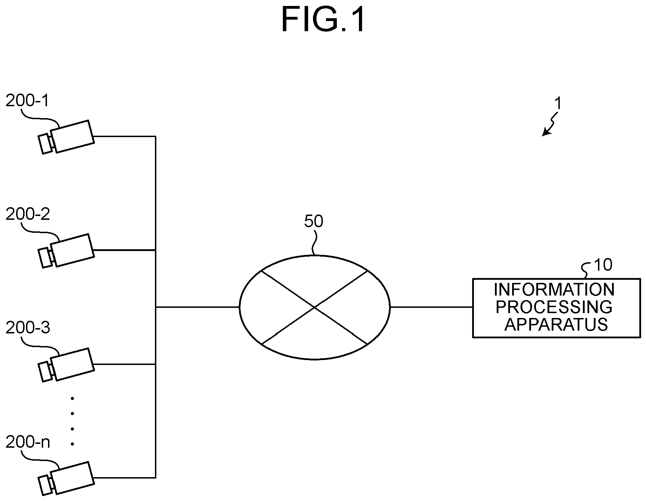

First, an information processing system for implementing the present embodiment will be described. FIG. 1 is a diagram illustrating a configuration example of an information processing system according to a first embodiment. As illustrated in FIG. 1, an information processing system 1 is a system in which the information processing apparatus 10, camera devices 200-1 to 200-n (n is any integer. Hereinafter, collectively referred to as a "camera device 200") are connected via a network 50 so as to be communicated with each other.

For the network 50, for example, various kinds of communication networks, such as an intranet, that is used inside of a store, such as a retail store, may be used irrespective of a wired or wireless manner. Furthermore, instead of a single network, the network 50 may be constituted of, for example, an intranet and the Internet by way of a network device, such as a gateway, or another device (not illustrated). In addition, an expression of "inside of a store" of a retail store or the like is not limited to indoors, but may include outdoors within the site of the retail store or the like.

The information processing apparatus 10 is an information processing apparatus, such as a desktop personal computer (PC), a notebook PC, or a server computer, that is installed, for example, inside of a store of a retail store and that is used by store staff, an administrator, or the like. Alternatively, the information processing apparatus 10 may be a cloud computer device managed by a service provider that provides a cloud computing service.

The information processing apparatus 10 receives, from the camera device 200, a plurality of images obtained by capturing, by the camera device 200, a predetermined image capturing range, such as each of selling sections or a checkout counter area, inside of the store, such as a retail store. Furthermore, the plurality of images mentioned here are, in a precise sense, video images captured by the camera device 200, that is, a series of frames of a moving image.

Furthermore, the information processing apparatus 10 extracts and specifies, from a video image captured by the camera device 200, a customer who visits the store (hereinafter, sometimes simply referred to as a "person" or a "customer") and tracks the specified person by using an existing object detecting technique.

Furthermore, the information processing apparatus 10 specifies, from the video image on the basis of a predetermined rule, a relationship among a plurality of persons and performs a grouping process on the persons. The grouping process is performed on the basis of determining, for example, that a plurality of persons who move in the same direction within a predetermined distance are a group customer. Furthermore, a group customer may be, for example, children together with their parents, a couple, a husband and a wife, or the like; however, the number of persons constituting a group customer is not limited to two, but three or more persons may constitute a group customer.

Furthermore, the information processing apparatus 10 generates, by using an existing skeleton detection technology, skeleton information on a person targeted for tracking (hereinafter, simply referred to as "tracking target person"), estimates a pose or a motion of the tracking target person by using an existing pose estimation technology or the like, and specifies a behavior performed by the tracking target person. Then, the information processing apparatus 10 associates the specified behavior with a group to which the specified person who performed the behavior belongs. As a result, it is possible to determine and analyze, with more accuracy, a purchase behavior or a fraudulent behavior, which is not able to be determined from only the behavior performed by each of the persons, by merging the behaviors performed by the persons belonging to the same group.

Furthermore, among a plurality of behavior types in each of which a transition of a process flow of behaviors exhibited in a period of time between a point at which the tracking target person enters inside of the store and at a point at which the person purchases a commodity product inside of the store is defined, the information processing apparatus 10 specifies a behavior type that is reached by the behavior exhibited by the tracking target person. The process flow of the behaviors and a process of specifying the reached behavior type will be described in detail later, but a person inside of the store may carries out various behaviors, such as a behavior of looking at a commodity product, or a behavior of picking up, comparing, or purchasing a commodity product, so that the behavior type mentioned here is a behavior type obtained by categorizing these behaviors by associating these behaviors with the process flow. In addition, the information processing apparatus 10 specifies the behavior type that is reached by the person by way of various behaviors. Furthermore, the specified behavior type may be merged by using a plurality of persons who belong to the same group. Accordingly, a behavior type reached in the case where the person A who is a group customer picks up a commodity product, compares the commodity product, and hands over the commodity product to the person B who belongs to the same group, and then, the person B purchases the commodity product is a behavior type of a behavior of, for example, purchasing a commodity product as a group customer.

Furthermore, in FIG. 1, the information processing apparatus 10 is illustrated as a single computer; however, the information processing apparatus 10 may be a distributed computing system constituted by a plurality of computers.

The camera devices 200 are, for example, monitoring cameras installed in each of the selling sections or the checkout counter area inside of a store, such as a retail store. The video image captured by the camera device 200 is transmitted to the information processing apparatus 10. In addition, position information, such as the coordinates, for specifying each of the commodity products and the selling section area is allocated to the respective commodity products and the selling section area captured by the camera device 200, and, for example, the information processing apparatus 10 is able to specify each of the commodity products and the selling section area from the video image received from the camera device 200.

Functional configuration of information processing apparatus 10

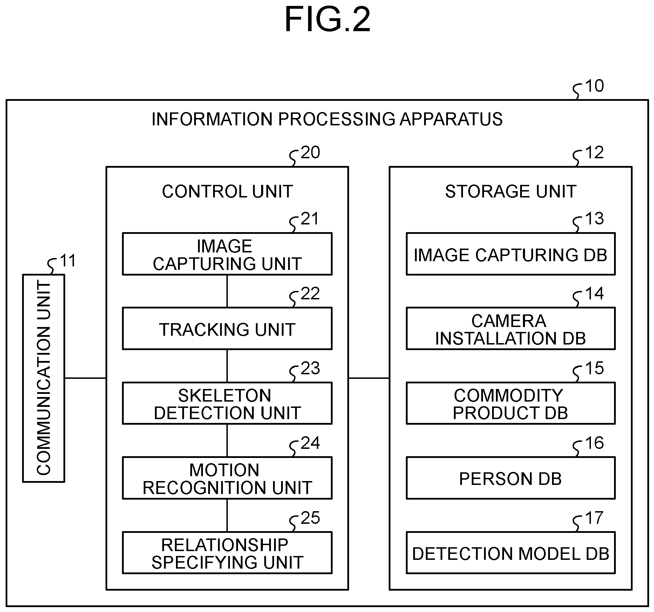

In the following, a functional configuration of the information processing apparatus 10 will be described. FIG. 2 is a diagram illustrating a configuration example of the information processing apparatus 10 according to the first embodiment. As illustrated in FIG. 2, the information processing apparatus 10 includes a communication unit 11, a storage unit 12, and a control unit 20.

The communication unit 11 is a processing unit that controls communication with another device, such as the camera device 200 and is a communication interface, such as a network interface card.

The storage unit 12 has a function for storing various kinds of data or programs executed by the control unit 20 and is implemented by, for example, a storage device, such as a memory or a hard disk. The storage unit 12 stores therein an image capturing DB 13, the camera installation DB 14, the commodity product DB 15, a person DB 16, a detection model DB 17, and the like. Furthermore, DB is an abbreviation of a database.

The image capturing DB 13 stores therein a plurality of captured images that are a series of frames captured by the camera device 200. Furthermore, the image capturing DB 13 is able to store therein the captured images by associating each of the captured images with the position information on each of the commodity products, a region of the selling section area, the coordinates for specifying an extracted person, or the like from each of the captured images. In addition, the image capturing DB 13 stores therein the skeleton information on the person who is extracted and specified from the captured image. Generation of the skeleton information will be described later.

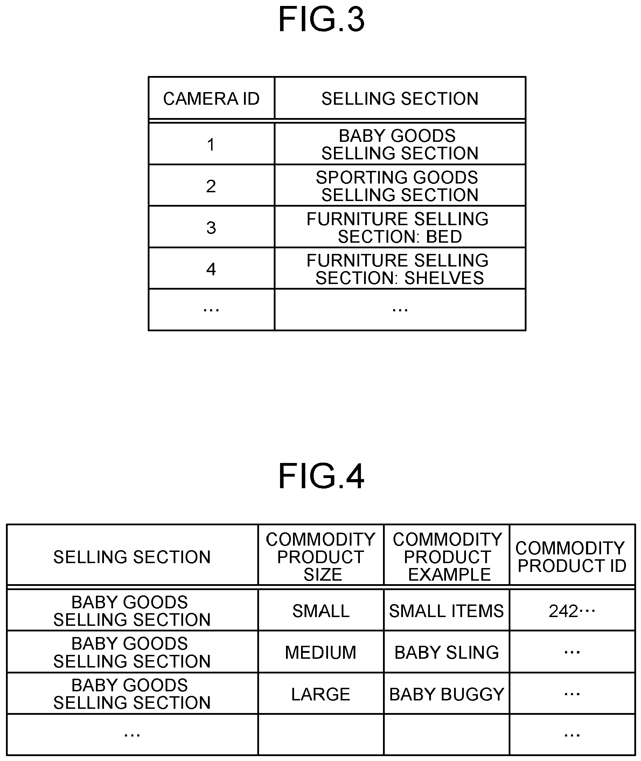

The camera installation DB 14 stores therein information for specifying the location in which each of the camera devices 200 is installed. The information stored here may be set in advance by an administrator or the like. FIG. 3 is a diagram illustrating an example of the information stored in the camera installation DB 14 according to the first embodiment. As illustrated in FIG. 3, the camera installation DB 14 stores therein, in an associated manner, each of the pieces of information, such as "camera ID and selling section". In the "camera ID" stored here, information for identifying a camera is set, and, in the "selling section", information for specifying a selling section in which a camera is installed is set. In the example illustrated in FIG. 3, an example in which a camera with a camera ID of 1 is installed in a baby goods selling section and a camera with a camera ID of 2 is installed in a sporting goods selling section is illustrated.

The commodity product DB 15 stores therein information on the commodity products that are placed in each of the selling sections. The information stored here may be set in advance by an administrator or the like. FIG. 4 is a diagram illustrating the information stored in the commodity product DB 15 according to the first embodiment. As illustrated in FIG. 4, the commodity product DB 15 stores therein, in an associated manner, each of the pieces of information, such as "selling section, commodity product size, commodity product example, and commodity product ID". Information for specifying a selling section is set in the "selling section", information on the size of a commodity product is set in the "commodity product size", an example of a corresponding commodity product is set in the "commodity product example", and information for specifying a commodity product is set in the "commodity product ID". The example illustrated in FIG. 4 indicates that "242···" is set, as the commodity product ID, to a small items corresponding to commodity products with small sizes in the baby goods selling section. Furthermore, the commodity product DB 15 may store therein position information, such as the coordinates, for specifying a selling section area of each of the commodity products or for specifying a commodity product. The information processing apparatus 10 is able to specify, on the basis of the position information, a selling section area of each of the commodity products or a commodity product from the video image received from the camera device 200.

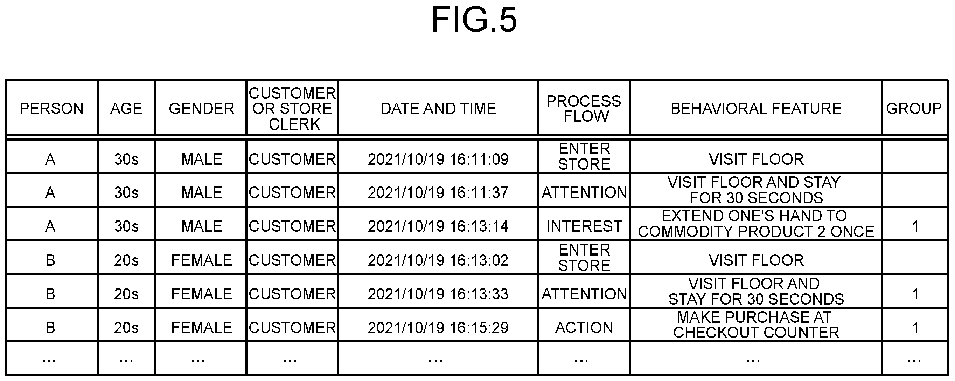

The person DB 16 stores therein information on a tracking target person, such as a customer who is visiting the store or a store clerk. The information stored here is generated and set by the information processing apparatus 10 on the basis of the video image, the information, or the like received from the camera device 200. FIG. 5 is a diagram illustrating an example of the information that is stored in the person DB 16 according to the first embodiment. As illustrated in FIG. 5, the person DB 16 stores therein, in an associated manner, pieces of information, such as "person, age, gender, store clerk or customer, date and time, process flow, behavioral feature, and group". In the item of "person" stored here, for example, an identifier that uniquely indicates a tracking target person is set. Furthermore, in the items of "age", "gender", and "customer or store clerk", information on the age and the gender of the person and information whether the person is a customer or a store clerk that are specified by the information processing apparatus 10 on the basis of the video image, the information, or the like received from the camera device 200 are set, respectively. Furthermore, in the items of "date and time", "process flow", and "behavioral feature", the date and time at which a behavior type of a tracking target person is specified by the information processing apparatus 10, the process flow of the specified behavior type, and the behavioral feature determined on the basis of the specified behavior type are set, respectively. Furthermore, in the item of "group", an identifier that uniquely indicates a group to which a person subjected to a grouping process on the basis of, for example, a relationship between persons belongs is set. In addition, in the example illustrated in FIG. 5, the information stored in the person DB 16 is a behavior history of the tracking target person, so that, in the item of "group", as illustrated in FIG. 5, an identifier may be set at the time of the grouping process. For example, in FIG. 5, it is indicted that the persons A and B are determined as the persons who belong to the same group that is indicated by a group 1 and are grouped as a result of the determination. Furthermore, the item of "group" illustrated in FIG. 5 is one example, and, for example, it may be possible to store information on the items of "group" and "person" in an associated manner and manage the group between the persons in a DB that is different from the person DB 16.

The detection model DB 17 stores therein information on a machine learning model for specifying a person from a video image captured by the camera device 200, or stores therein model parameters for building the machine learning model. The machine learning model is generated from machine learning performed by using a video image, that is, an image, captured by the camera device 200 as a feature amount and by using a person as a correct answer label. The machine learning model may be generated by the information processing apparatus 10 or may be generated and trained by another information processing apparatus.

Furthermore, the detection model DB 17 stores therein information that is related to the machine learning model for specifying a relationship between each of the target objects from the video image captured by the camera device 200 and stores therein model parameters for building the machine learning model. The relationship of each of the target objects mentioned here is a relationship between, for example, a person and another person, or a relationship between a person and an object. In addition, the machine learning model for specifying the relationship between each of the target objects is a machine learning model for Human Object Interaction Detection (HOID) generated by performing, for example, machine learning.

Furthermore, the above described information stored in the storage unit 12 is only one example, and the storage unit 12 may store therein various kinds of information other than the above described information.

The control unit 20 is a processing unit that manages the entirety of the information processing apparatus 10 and is, for example, a processor or the like. The control unit 20 includes an image capturing unit 21, a tracking unit 22, a skeleton detection unit 23, a motion recognition unit 24, and a relationship specifying unit 25. Furthermore, each of the processing units is an example of an electronic circuit included by the processor or an example of a process executed by the processor.

The image capturing unit 21 is a processing unit that captures an image. For example, the image capturing unit 21 receives image data on the image captured by the camera device 200, and then, stores the received image data in the image capturing DB 13.

The tracking unit 22 is a processing unit that acquires each of the pieces of image data captured in a period of time between a point at which the person who enters inside the store and a point at which the person leaves the store. Specifically, the tracking unit 22 extracts the image data on the image on which the person is captured from a plurality of pieces of image data, i.e., a plurality of frames, captured by the camera device 200 and specifies the person among the frames.

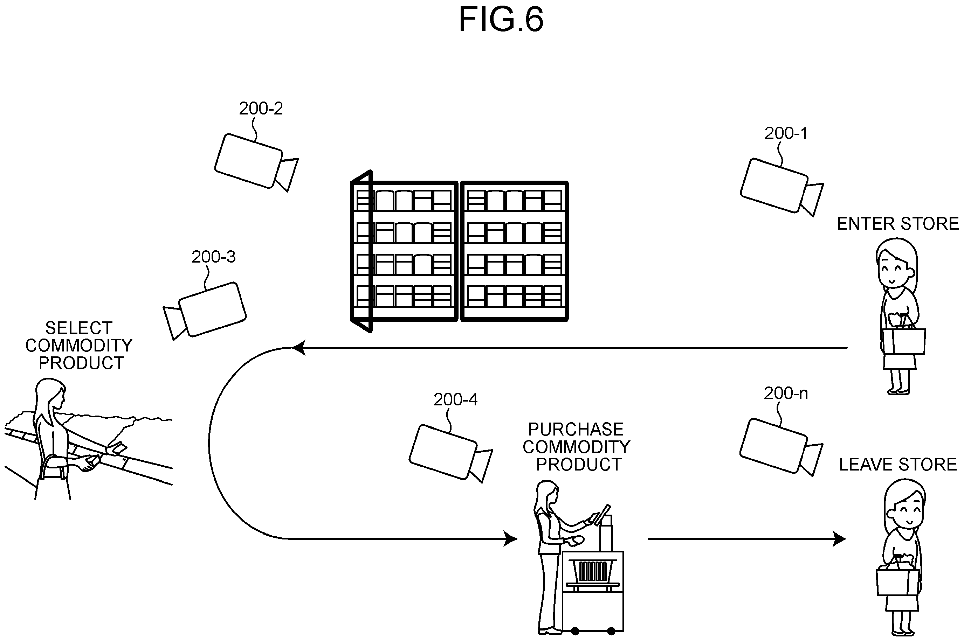

For example, the tracking unit 22 tracks a certain person in a period of time between a point at which the person enters inside of the store and at a point at which the person leaves the store, and acquires each of the pieces of image data on the image of the person captured in the store. FIG. 6 is a diagram illustrating tracking of a customer. As illustrated in FIG. 6, the tracking unit 22 extracts persons from a plurality of pieces of image data captured by the camera devices 200 installed in various sites, such as an entrance of the store, each of the selling sections, a checkout counter area, or the exit of the store, of inside of the store, specifies the same person from the extracted persons, and performs tracking for each person.

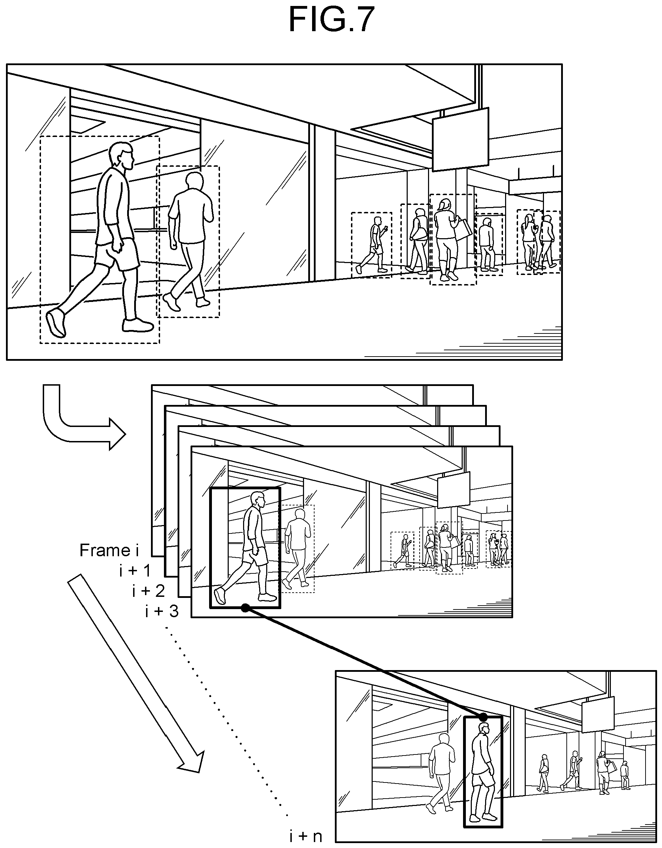

FIG. 7 is a diagram illustrating an example of extraction and tracking of a person from an in-store image according to the first embodiment. As illustrated in FIG. 7, the tracking unit 22 extracts a person from the in-store image by using, for example, an existing detection algorithm, such as YOU Only Look Once (YOLO), Single Shot Multibox Detector (SSD), or Region Based Convolutional Neural Networks (RCNN). The in-store image is each of the pieces of image data captured by the camera device 200, and, as illustrated in FIG. 7, the extracted person is indicated by a bounding box (BBOX) that encloses the subject region in the image by a rectangular box.

Furthermore, as indicated on the upper part illustrated in FIG. 7, it is, of course, conceivable that a plurality of persons are extracted from the in-store image. Accordingly, as indicated on the lower part illustrated in FIG. 7, for example, the tracking unit 22 specifies the same person among the frames on the basis of the plurality of pieces of image data, i.e., the degree of similarity of the BBOXes of the person among the plurality of frames. Regarding the process of specifying the same person, for example, an existing tracking algorithm, such as Tracking Learning Detection (TLD) or Kernelized Correlation Filters (KCF), may be used.

The skeleton detection unit 23 acquires skeleton information on the person who appears in the image data. Specifically, the skeleton detection unit 23 performs skeleton detection on the person with respect to the image data in which each of the persons extracted by the tracking unit 22 appears.

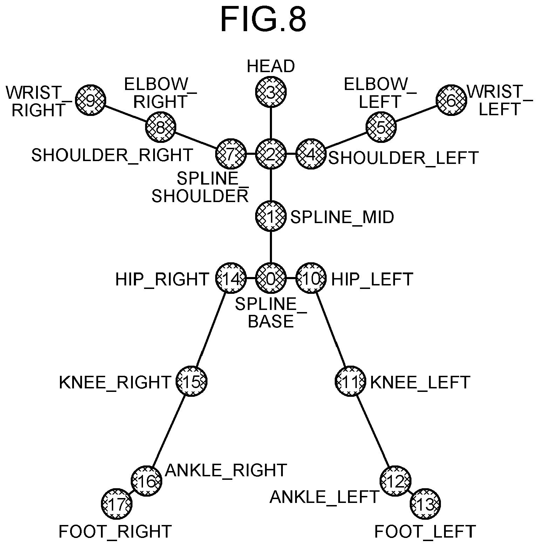

For example, the skeleton detection unit 23 acquires the skeleton information by inputting the image data on the extracted person, i.e., a BBOX image indicated the extracted person, to a trained machine learning model that has been built by using an existing algorithm, such as DeepPose or OpenPose. FIG. 8 is a diagram illustrating an example of the skeleton information. It is possible, for the skeleton information, 18 pieces (number 0 to number 17) of definition information that are obtained by numbering each of joints specified by a known skeleton model. For example, a right shoulder joint (SHOULDER_RIGHT) is indicated by number 7, a left elbow joint (ELBOW_LEFT)is indicated by number 5, a left knee joint (KNEE_LEFT) is indicated by number 11, and a right hip joint (HIP_RIGHT) is indicated by number 14. Therefore, it is possible to acquire 18 pieces of coordinate information on the skeleton illustrated in FIG. 8 from the image data, and, for example, "the X coordinates=X7, the Y coordinates=Y7, and the Z coordinates=Z7" are acquired as the position of the right shoulder joint indicated by number 7. Furthermore, for example, the Z-axis may be defined as a distance direction from the image capturing device to the target, the Y-axis may be defined as a height direction perpendicular to the Z-axis, and the X-axis may be defined as a horizontal direction.

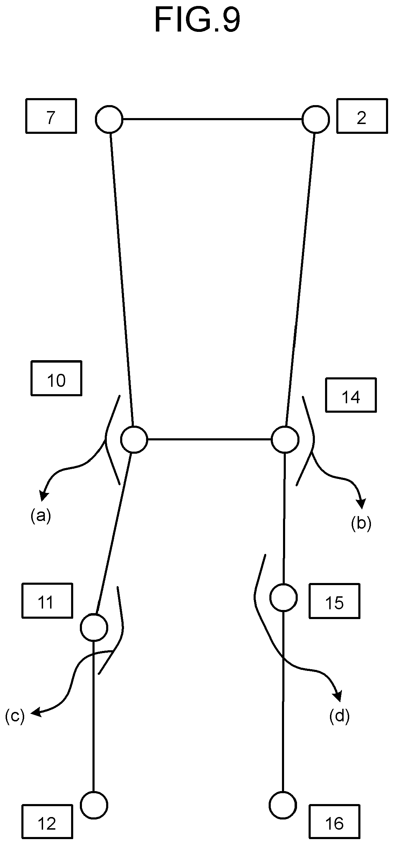

Furthermore, the skeleton detection unit 23 is able to determine, by using a machine learning model in which patterns of the skeletons are trained in advance, a pose of the entire body, such as a pose of standing up, walking, squatting down, sitting down and lying down. For example, the skeleton detection unit 23 is able to determine the most similar pose of the entire body by using a machine learning model in which an angle formed between one of joints and the other joint is defined as the skeleton information illustrated in FIG. 8 or a fine play drawing is trained by using Multilayer Perceptron. FIG. 9 is a diagram illustrating pose determination performed on the entire body. As illustrated in FIG. 9, the skeleton detection unit 23 is able to detect a pose of the entire body by acquiring an angle (a) formed between a joint of "HIP_LEFT" indicated by number 10 and the joint of "KNEE_LEFT" indicated by number 11, an angle (b) formed between the joint of "HIP_RIGHT" indicated by number 14 and a joint of "KNEE_RIGHT" indicated by number 15, an angle (c) of the joint of "KNEE_LEFT" indicated by number 11, an angle (d) of a joint of "KNEE_RIGHT" indicated by number 15, or the like.

Furthermore, the skeleton detection unit 23 is able to detect a motion of each part category by performing the pose determination on the parts on the basis of a 3D joint pose of a human body. Specifically, the skeleton detection unit 23 is also able to perform coordinate transformation from 2D joint coordinates to 3D joint coordinates by using an existing algorithm, such as a 3D-baseline method.

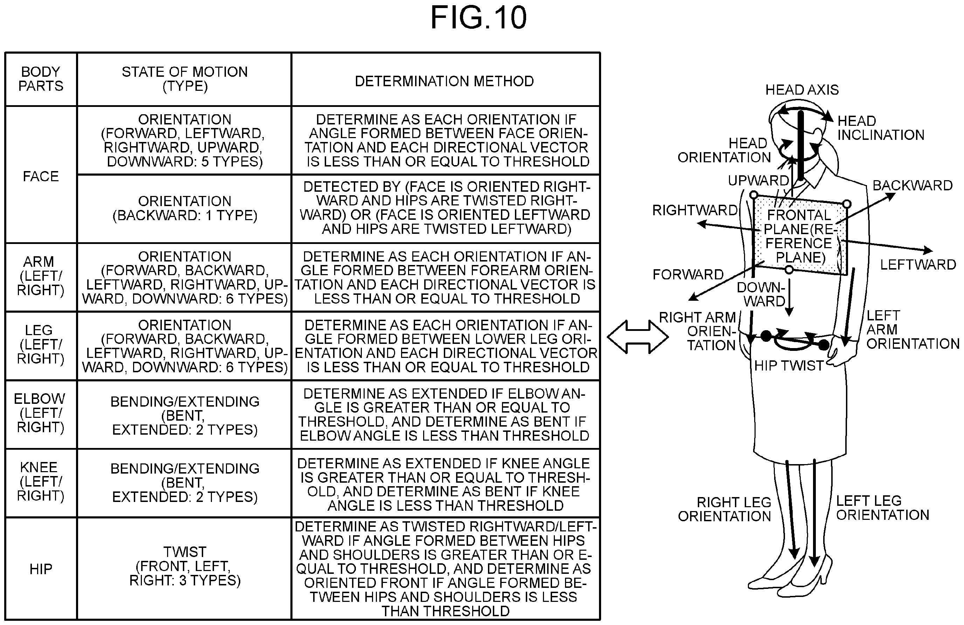

FIG. 10 is a diagram illustrating detection of a motion of each of the parts. As illustrated in FIG. 10, regarding the part "face", the skeleton detection unit 23 is able to detect whether the face is oriented forward, leftward, rightward, upward, and downward (five types) on the basis of whether or not the angle formed between the face orientation and each of the directional vectors is equal to or less than a threshold. Furthermore, the skeleton detection unit 23 specifies the orientation of the face on the basis of the vector that is defined on condition that "the starting point is a midpoint of both ears and the end point is a nose". Furthermore, the skeleton detection unit 23 is able to detect whether or not the face is oriented backward on the basis of whether "the face is oriented rightward and the hips are twisted rightward" or "the face is oriented leftward and the hips are twisted leftward".

Regarding the part "arm", the skeleton detection unit 23 is able to detect whether each of the left and right arms is oriented forward, backward, leftward, rightward, upward, and downward (six types) on the basis of whether or not the angle formed between the forearm orientation and each of the directional vectors is equal to or less than a threshold. Furthermore, the skeleton detection unit 23 is able to detect the orientation of the arm on the basis of the vector that is defined on condition that "the starting point is an elbow and the end point is a wrist".

Regarding the part "leg", the skeleton detection unit 23 is able to detect whether each of the left and right legs is oriented forward, backward, leftward, rightward, upward, and downward (six types) on the basis of whether or not the angle formed between the lower leg orientation and each of the directional vectors is equal to or less than a threshold. Furthermore, the skeleton detection unit 23 is able to detect the orientation of the lower leg on the basis of the vector that is defined on condition that "the starting point is a knee and the end point is an ankle".

Regarding the part "elbow", the skeleton detection unit 23 is able to detect that the elbow is extended if the angle of the elbow is equal to or greater than a threshold and detect that the elbow is bent if the angle of the elbow is less than the threshold (2 types). Furthermore, the skeleton detection unit 23 is able to detect the angle of the elbow on the basis of the angle formed by a vector A that is defined on condition that "the starting point is an elbow and the end point is a shoulder" and a vector B that is defined on condition that "the starting point is an elbow and the end point is a wrist".

Regarding the part "knee", the skeleton detection unit 23 is able to detect that the knee is extended when the angle of the knee is equal to or greater than a threshold and detect that the knee is bent when the angle of the knee is less than the threshold (2 types). Furthermore, the skeleton detection unit 23 is able to detect the angle of the knee on the basis of the angle formed by a vector A that is defined on condition that "the starting point is a knee and the end point is an ankle" and a vector B that is defined on condition that "the starting point is a knee and the end point is a hip".

Regarding the part "hips", the skeleton detection unit 23 is able to detect a left twist and a right twist (two types) on the basis of whether or not the angle formed between each of the hips and the shoulders is equal to or greater than a threshold, and is able to detect a forward facing state is the angle formed between each of the hips and the shoulders is less than the threshold. Furthermore, the skeleton detection unit 23 is able to detect the angle formed between each of the hips and the shoulders on the basis of the rotation angle of each of a vector A that is defined on condition that "the starting point is a left shoulder and the end point is a right shoulder" and a vector B that is defined on condition that "the starting point is a left hip (hip (L)) and the end point is a right hip (hip (R))", around the axis vector C that is defined on condition that "the starting point is a midpoint of both hips and the end point is a midpoint of both shoulders".

A description will be given here by referring back to FIG. 2. The motion recognition unit 24 is a processing unit that recognizes a motion performed by a person on the basis of a detection result of the skeleton information obtained by the skeleton detection unit 23. Specifically, the motion recognition unit 24 specifies a behavior including at least one motion on the basis of a transition of skeleton information recognized for each of a plurality of consecutive frames.

For example, if a skeleton representing a face looking at the front is determined on the basis of part category determination and a skeleton standing up is determined on the basis of the pose determination of the entire body are consecutively detected among several frames, the motion recognition unit 24 recognizes a motion of "looking at the front for a certain period of time". Furthermore, if a skeleton in which a variation in the pose of the entire body is less than a predetermined value is consecutively detected among several frames, the motion recognition unit 24 recognizes a motion of "unmoving".

Furthermore, if a skeleton in which the angle of the elbow is changed by an amount equal to or greater than a threshold is detected among several frames, the motion recognition unit 24 recognizes a motion of "moving one hand forward" or a motion of "extending one arm", and, if a skeleton in which the angle of the elbow is changed by an amount equal to or greater than the threshold and then the angle of the elbow becomes less than the threshold is detected among several frames, the motion recognition unit 24 recognizes a motion of "bending one hand". In addition, if a skeleton in which the angle of the elbow is changed by an amount equal to or greater than the threshold and then the angle of the elbow becomes less than the threshold is detected and after that this angle is continued among several frames, the motion recognition unit 24 recognizes a motion of "looking at one hand".

Furthermore, if a skeleton in which the angle of the wrist is consecutively changed is detected among several frames, the motion recognition unit 24 recognizes a motion of "the wrist coordinates frequently moving for a certain period of time". If a skeleton in which the angle of the wrist is consecutively changed and the angle of the elbow is consecutively changed is detected among several frames, the motion recognition unit 24 recognizes a motion of "the elbow coordinates and the wrist coordinates frequently moving for a certain period of time". If a skeleton in which each of the angle of the wrist, the angle of the elbow, and the orientation of the entire body are consecutively changed is detected among several frames, the motion recognition unit 24 recognizes a motion of "a frequent change in the orientation of the body and the entire body motion for a certain period of time".

Furthermore, the motion recognition unit 24 specifies a commodity product or a selling section area in the image data in which a person, a commodity product, and a selling section area of the commodity product appear on the basis of, for example, an image capturing region of each of the camera devices 200 and the coordinates of each of the commodity products and the coordinates of the selling section area of each of the commodity products in the image capturing region.

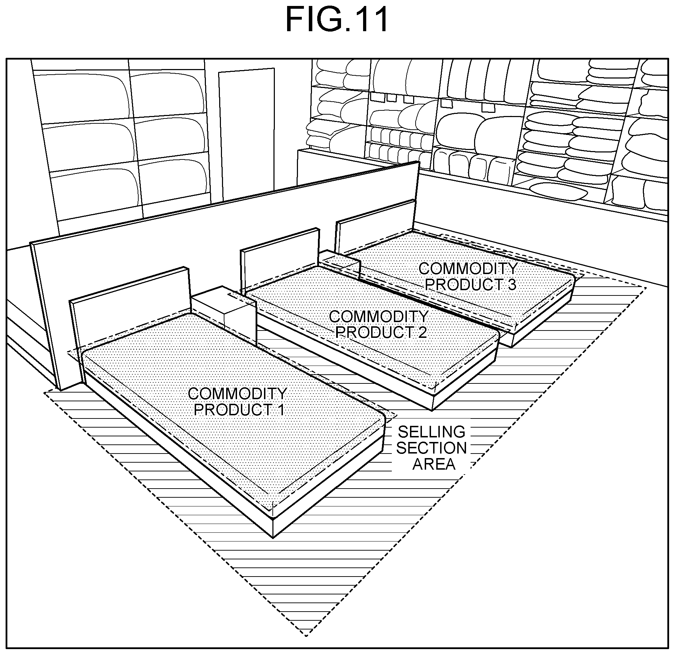

FIG. 11 is a diagram illustrating an example of designation of an ROI according to the first embodiment. As illustrated in FIG. 11, by designating, in advance, a region (region of interest: ROI) of each of the commodity products and a selling section area that are included in the image capturing region of the camera device 200, the motion recognition unit 24 is able to specify the commodity products and the selling section area from the image data. Then, the motion recognition unit 24 is able to specify, on the basis of a correlation between the ROI in each of the pieces of image data and a behavior exhibited by a tracking target person, a purchase behavior exhibited by the tracking target person, such as a behavior of, for example, the tracking target person entering a selling section area, staying on a floor, extending the hand to a commodity product 1, sitting down or lying down a commodity product 3.

Furthermore, the motion recognition unit 24 specifies a first behavior type that is reached by a behavior exhibited by the tracking target person from among a plurality of behavior types in each of which a transition of a process flow of the behaviors exhibited in a period of time between at a point at which the tracking target person enters the store and a point at which the tracking target person purchases a commodity product is defined.

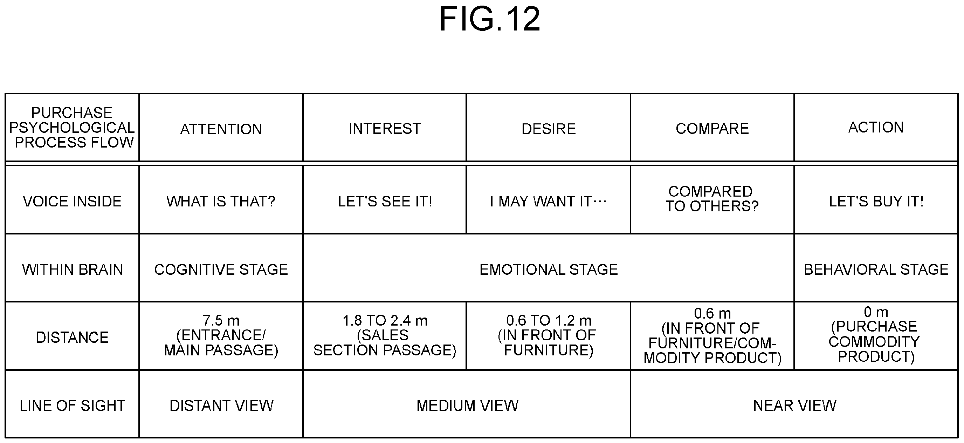

FIG. 12 is a diagram illustrating an example of a purchase psychological process flow. FIG. 12 is a table of an AIDeCA model indicating a summary of a purchase psychological process flow of a customer. Specifically, for example, if a customer A visits the store and finds a banner or a poster displayed in a selling section area, the purchase psychological process flow is transitioned to "Attention". Then, if the customer A finds a poster that introduces a commodity product X that is a favorite of the customer A, the purchase psychological process flow is transitioned to "Interest". Furthermore, the customer A immediately picks up the commodity product X and checks details, a price, or the like of the commodity product X. At this time, the purchase psychological process flow is transitioned to "Desire". In addition, if the customer A recalls a commodity product Y that is a commodity product similar to the commodity product X and that the customer A purchased the other day, and then, if the customer A compares the commodity product X to the commodity product Y, the purchase psychological process flow is transitioned to "Compare". Then, as a result of the comparison, if the customer A is satisfied with the commodity product X and put the commodity product X in a shopping basket, the purchase psychological process flow is transitioned to "Action". The purchase psychological process flow illustrated in FIG. 12 is only one example and, in this way, a customer exhibits the behavior associated with the purchase psychological process flow illustrated in FIG. 12 and reaches some sort of behavior before the customer A leaves the store. The motion recognition unit 24 uses a type of the behavior to be reached as the first behavior type, specifies which behavior the customer has reached, and specifies a purchase behavior process flow that is associated with the behavior reached by the customer.

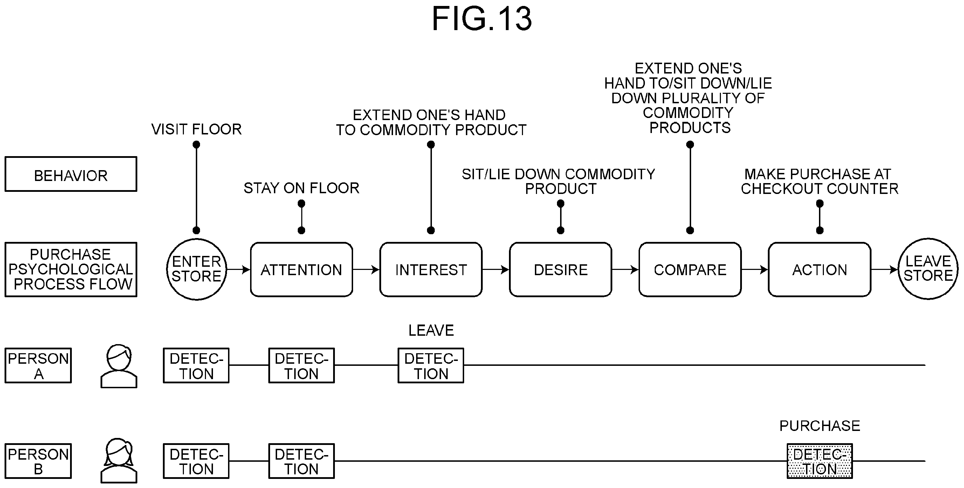

FIG. 13 is a diagram illustrating a process of specifying a reached behavior type according to the first embodiment. The motion recognition unit 24 detects each of the behaviors performed by the tracking target person and specifies the reached behavior type and the purchase psychological process flow.

The example illustrated in FIG. 13 indicates that, regarding the person A, each of the behavior of the person A visiting a certain floor, the behavior of the person A staying on the floor for a while, and the behavior of the person A extending the hand to the commodity product placed on the floor has been detected by the motion recognition unit 24. In this case, a behavior type reached by the person A is, as illustrated in FIG. 13, "extending one's hand to a commodity product", and the reached purchase psychological process flow is "Interest" that is associated with "extending one's hand to a commodity product". Similarly, the behavior type reached by the person B is, as illustrated in FIG. 13, "purchase at a checkout counter", and the reached purchase psychological process flow is "Action". Furthermore, each of the behavior types associated with the purchase psychological process flow illustrated in FIG. 13 is only one example and is not limited to this example.

Here, if determination is performed on the behavior performed by each of the persons A and B illustrated in FIG. 13, it is determined that the person A extends the hand to the commodity product, and the purchase psychological process flow is transitioned to "Interest", but it is determined that the person A left the site without purchasing the commodity product even though the person A was interested in the commodity product. In contrast, it is determined that the person B visits the floor and stays on the floor for a while, and then purchased some sort of commodity product without picking up the commodity product. However, it is assumed that, in practice, the persons A and B are a group of customers, the person A passes the commodity product interested by the person A to the person B, and the person B has purchased the commodity product. Even in this case, the behavior analysis illustrated in FIG. 13 is consequently conducted.

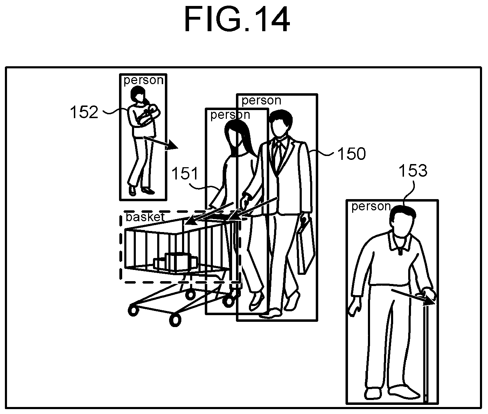

Accordingly, the relationship specifying unit 25 specifies, from the video image captured by the camera device 200, on the basis of a predetermined rule, relationships between a plurality of persons, and performs a grouping process. FIG. 14 is a diagram illustrating an example of a grouping process performed on a plurality of persons according to the first embodiment. FIG. 14 is a diagram illustrating a video image of a certain selling section area captured by the camera device 200. As illustrated in FIG. 14, the information processing apparatus 10 is able to specify a group on the basis of a position of the BBOX of the person or a basket that is specified from the video image of the inside of the store captured by the camera device 200, on the basis a movement vector, and the like.

For example, if the BBOXes of the plurality of persons move in the same direction in a predetermined period of time while maintaining a predetermined distance, the information processing apparatus 10 specifies that the plurality of persons are in the same group. In the example illustrated in FIG. 14, the information processing apparatus 10 determines that the BBOXes of a person 150 and a person 151 move in the same direction in a predetermined period of time while maintaining a predetermined distance, and performs a grouping process on the person 150 and the person 151. In contrast, it is determined, from the video image illustrated in FIG. 14, that each of a person 152 and a person 153 is a single customer who does not belong to the group. Of course, in another video image, it may be possible for each of the person 152 and the person 153 to be grouped with another person or the like. In addition, the state in which the BBOXes move in the same direction in the predetermined period of time while maintaining the predetermined distance is able to be determined from, for example, a position and an amount of movement of the BBOX that are specified from each of the captured images that are consecutively captured. In addition, the same direction mentioned here need not always be the same direction, but may be a direction within a predetermined range that is regarded as the same direction.

Furthermore, in addition to the behaviors of the plurality of persons moving in the same direction within the predetermined distance described with reference to FIG. 14, for example, a grouping process is performed on the plurality of persons on the basis of the position and the movement vector of the BBOX of a person or a basket, the skeleton information on a person specified from the captured image, or the like. Examples of the behaviors other than the behaviors described with reference to FIG. 14 includes a behavior of a plurality of persons facing each other for a predetermined period of time, receiving and passing a predetermined object, putting an object into a same basket, taking out an object from the same basket, and being present within a predetermined distance at the time at which the plurality of persons enter the store and before the plurality of persons make a payment. Then, for example, if at least one of the behaviors occurs a predetermined number of times or more, the relationship specifying unit 25 determines that the plurality of persons are a group customer, and performs a grouping process. Furthermore, the number of persons in the group is not limited to two, and three or more persons may constitute a group. In this case, for example, in the case where it is determined that, after a group constituted of persons A and B and a group constituted of persons B and C are formed, the persons A and C are also in a group relationship, a group constituted of person A, B, and C may be formed.

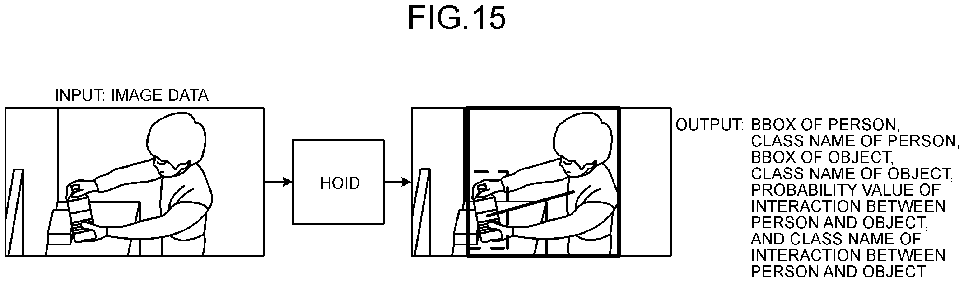

Furthermore, to specify the relationship between the plurality of persons performed by the relationship specifying unit 25, an existing technology, such as HOID, may be used. FIG. 15 is a diagram illustrating a process of specifying a relationship on the basis of HOID. As illustrated in FIG. 15, the relationship specifying unit 25 inputs image data that is a single frame of a video image captured by the camera device 200 to a machine learning model that is used for HOID, and acquires an output result. The output result is, for example, a BBOX of a person, a class name of the person, a BBOX of an object, a class name of the object, a probability value of an interaction between the person and the object, and a class name of the interaction of the person and the object, or the like.

The relationship specifying unit 25 specifies a relationship between the plurality of persons visiting in the store by inputting the video image in which the inside of the store is captured to the machine learning model. In addition, the machine learning model is a model that is used for the HOID and that is generated by performing machine learning such that a first class that indicates a first person and first region information that indicates a region in which the person appears, a second class that indicates a second person and second region information that indicates a region in which an object appears, and a relationship between the first class and the second class are identified.

As a result, for example, the relationship specifying unit 25 is able to specify, as the class of the person, a "person (customer)" and a "person (store clerk)" or the like, and is able to specify that a relationship between the "person (customer)" and the "person (store clerk)" is a relationship indicating that the "store clerk is talking with the customer" or the like. The relationship specifying unit 25 is also able to specify a relationship of "talk" or the like by specifying the relationship in this way with respect to the subsequent frames. Furthermore, the relationship specifying unit 25 is able to specify, for example, a "person (customer)" as a class of the person, a "commodity product" as a class of the object, and is able to specify that a relationship between the "customer" and the "commodity product" is a relationship indicating that the "customer is holding a commodity product" or the like.

Furthermore, the relationship specifying unit 25 is able to specify, for example, a plurality of "persons (customers)" as a class of the person, a "commodity product" as a class of the object, or the like, and is able to specify that the relationship between the "customer" and the "customer" is a relationship indicating that "the customer passes the commodity product to the other customer", or the like. Then, if a relationship between the specified class of the plurality of persons and the plurality of classes satisfies a predetermined condition, the relationship specifying unit 25 performs a grouping process on the plurality of persons. For example, a predetermined condition mentioned here is a relationship between the "customer" and the "customer" indicates that "the customer passes a commodity product to the other customer". In this way, on the basis of the relationship between the "customer" and the "customer", the relationship specifying unit 25 is able to specify a group customer and perform a grouping process on the plurality of persons.

In the above, a process of specifying a motion made by a person and, in addition, a behavior exhibited by the person performed by the motion recognition unit 24, and a process of specifying a relationship between the plurality of persons performed by the relationship specifying unit 25 have been described as an example by mainly using a purchase behavior exhibited by a group customer. However, the process performed by the motion recognition unit 24 and the relationship specifying unit 25 may also be performed on a fraudulent behavior exhibited by a group that is constituted of a plurality of persons. In the following, even in this case, a plurality of persons who belong to a group and who exhibit the fraudulent behavior will be described as customers or a group customer.

After that, the behaviors exhibited by the grouped persons are recognized as the behaviors exhibited by the group customer instead of being recognized as the behaviors exhibited by respective persons, and are then merged and analyzed. For example, in the example illustrated in FIG. 13, a behavior analysis is conducted such that the person A who is a group customer stays on a floor for a while, extends one's hand to the commodity product and expresses an interest in the commodity product, and then, the person B who belongs to the same group has purchased the commodity product. Furthermore, the process of merging the behaviors is not limited to a process of merging the behaviors exhibited by the group customer into a series of behaviors, but may be a process of summing a period of time taken for each of the behaviors included in the series of behaviors exhibited by the respective persons. For example, it may be possible to sum up a period of time for which the person A who is a group customer picks up a plurality of commodity products in hand and tries on the commodity products by, for example, comparing the commodity products and a period of time for which the person B who belongs to the same group similarly tries on the plurality of commodity products by, for example, comparing the commodity products.

For example, the person A who is a group customer stays on a floor for a while. At this time, the information processing apparatus 10 specifies that the purchase psychological process flow has been transitioned to "Attention". Then, the information processing apparatus 10 specifies a purchase psychological process flow of "Interest" that is a transition destination of the purchase psychological process flow of "Attention". Then, the information processing apparatus 10 determines that the purchase psychological process flow has been transitioned to "Interest" when one of the person A and the person B who are the group customer performs a condition of a behavior of "extending one's hand to a commodity product" associated with the purchase psychological process flow of "Interest". At this time, the information processing apparatus 10 measures a period of time taken for each of the process flows included in the purchase psychological process flow.

In this way, the behavior analysis of the customers is conducted on the basis of the merged behavior, a period of time taken for each of the behaviors, and thus, an appropriate reaction content is able to be determined with respect to the customers. In addition, the behavior exhibited by the customer may include a customer service provided by a store clerk with respect to the customer. Accordingly, the information processing apparatus 10 is able to conduct a behavior analysis on the customer by determining whether or not a person appearing in the video image captured by the camera device 200 is a customer or a store clerk, detecting, for example, a customer service behavior provided by the store clerk, excluding the store clerk from a grouping process performed on the persons, or the like.

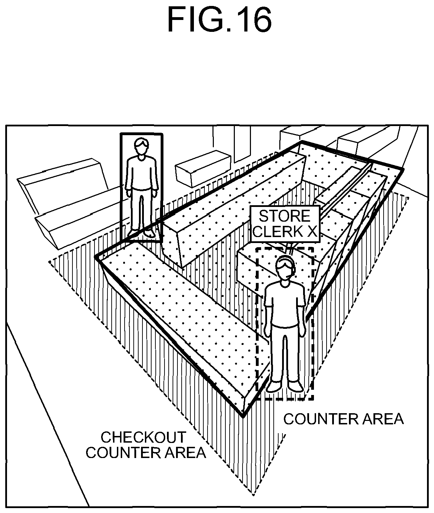

FIG. 16 is a diagram illustrating an example of determination of a store clerk according to the first embodiment. FIG. 16 is a diagram illustrating a video image of a checkout counter area captured by the camera device 200. In the example illustrated in FIG. 16, two persons are captured in the checkout counter area; however, in the counter area, in general, a customer does not enter the counter area and only the store clerk enters the counter area, so that the information processing apparatus 10 is able to determine that the person who is in the counter area is a store clerk.

Furthermore, the information processing apparatus 10 is able to determine a store clerk by using, for example, an image feature of a person. The image feature mentioned here is, for example, image feature of the body, such as a uniform, an apron, or a name tag, an image feature amount obtained by Re-Identification (Re-ID), an image feature obtained by specifying a position of the body after a skeleton estimation is performed on the person, or the like. In addition, if one person who exhibits the same image feature is staying in the same area for a long period of time equal to or greater than a predetermined period of time, and is closer to a plurality of persons each having a different image feature, the information processing apparatus 10 is able to determine that a customer service is being provided by a store clerk and determine that the subject one person is the store clerk. The methods of determining the store clerk may be performed by a single process or may be performed by processes in combination.

### Flow of process

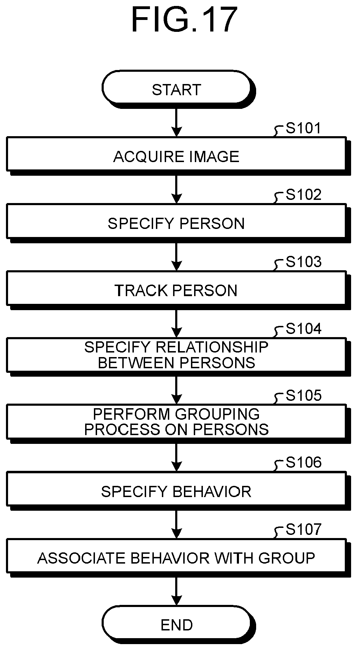

In the following, the flow of the grouping process performed by the information processing apparatus 10 will be described. FIG. 17 is a flowchart illustrating the grouping process according to the first embodiment. The grouping process illustrated in FIG. 17 may be performed at intervals of, for example, a certain period of time, or may be performed every time a captured image is received from the camera device 200 by the information processing apparatus 10.

First, as illustrated in FIG. 17, the information processing apparatus 10 acquires, from the image capturing DB 13, a captured image in which a predetermined image capturing range, such as the inside of the store of the retail store, is captured by the camera device 200 (Step S101). Furthermore, in the grouping process illustrated in FIG. 17, the captured image, in a precise sense, a monitoring video image, that is captured by the camera device 200 is processed in real time, so that captured images are transmitted from the camera device 200 as needed, and are stored in the image capturing DB 13.

Then, the information processing apparatus 10 uses an existing object detection technology and specifies a person from the captured image acquired at Step S101 (Step S102). Furthermore, regarding a process of specifying the person, it is, of course, conceivable that a plurality of persons is specified from the captured image, that is, a single frame of the video image that is captured by the camera device 200. Accordingly, the process, such as a process at Step S103 or S104 and the subsequent processes, performed on the respective persons is performed on each of the persons specified at Step S102.

Then, the information processing apparatus 10 tracks the person specified at Step S102 (Step S103). Tracking of the person is performed on for each of the persons by specifying the same person by using an existing technology performed on the person specified from a plurality of frames of the video image captured by the camera device 200. As a result, as the flow of the process, in a precise sense, a tracking of the person is performed by repeatedly performing the processes at Steps S101 to S103. In addition, regarding the person to be tracked, a store clerk is also included in addition to the customer. The store clerk is able to be determined, by using, for example, an existing technology, on the basis of an image feature amount of the video image captured by the camera device 200, a behavior exhibited by the person, or the like, so that, if the determination is performed on the basis of the image feature amount of the video image, the process of determining a store clerk may be performed during the processes at Steps S101 to S103. In contrast, if the determination is performed on the basis of the behavior exhibited by the person, the process of determining the store clerk may be performed after the process of specifying the behavior performed at Step S106.

Then, the information processing apparatus 10 specifies a relationship between tracking target persons on the basis of a predetermined rule (Step S104). The relationship between the persons may be specified by using not only the persons specified from a video image captured by the camera device 200 but also the objects specified by using an existing object detection technology. Accordingly, the predetermined rule may be a rule for a plurality of persons exhibiting a behavior of, for example, moving in the same direction within a predetermined distance, facing each other for a predetermined period of time, receiving and passing a predetermined object, putting in an object and taking out an object with respect to the same basket, being within a predetermined distance at a time at which the persons enter the store and at a time before the persons make a payment, or the like.

Then, the information processing apparatus 10 performs a process of grouping the plurality of persons on the basis of the relationship specified at Step S104 (Step S105). For example, if the relationship specified at Step S104 satisfies a predetermined condition, the information processing apparatus 10 performs a grouping process on the plurality of persons. Furthermore, the person determined to be a store clerk may be excluded from the grouping process.

Then, the information processing apparatus 10 specifies a behavior exhibited by the tracking target person (Step S106). More specifically, for example, the information processing apparatus 10 uses an existing technology, acquires the skeleton information on the person from the captured images that are consecutively captured, and specifies a behavior including a motion exhibited by the person by determining the pose of the person. Furthermore, the information processing apparatus 10 uses the ROI that is set in advance to each of the commodity products or a selling section area included in an image capturing region of the camera device 200, specifies the commodity products or the selling section area included in the captured image, and performs determination in combination with the motion exhibited by the person, so that it is possible to specify more detailed behavior exhibited by the person with respect to the commodity products or the selling section area.

Furthermore, for example, if a process of grouping a plurality of persons by specifying a relationship between the persons on the basis of the behavior that is specified at Step S106, it may be possible to further perform the process at Step S104 or S105 after the process at Step S106 has been performed. However, the process is repeated from the Step S101 for each frame, i.e., for each captured image, of the video image captured by the camera device 200, so that it may be possible to specify the relationship between the persons on the basis of the behaviors that are specified up to the immediately previous frame in the repeatedly performed process. Furthermore, the information processing apparatus 10 is able to determine, on the basis of the specified behavior, whether or not the person who has exhibited the subject behavior is a store clerk. For example, the information processing apparatus 10 is able to determine that a person who is staying in the same area for a long period of time equal to or greater than a predetermined period of time and who is present closer to the other plurality of persons by the number of times equal to or greater than a predetermined the number of times is a store clerk.

Then, the information processing apparatus 10 associates the behavior specified at Step S106 with the group to which the person who has exhibited the behavior belongs (Step S107). The information processing apparatus 10 specifies, from among a plurality of behavior types in each of which a transition of a process flow of the behaviors exhibited until a commodity product is purchased in the store, a behavior type that is reached by the behavior exhibited by each of the plurality of grouped persons with respect to the respective commodity products. The information processing apparatus 10 associates the group to which the person who exhibited the specified behavior belongs with the specified behavior type.

For example, the information processing apparatus 10 specifies the behavior exhibited by the first person with respect to the commodity product from among the plurality of grouped persons, and specifies the behavior exhibited by the second person with respect to the commodity product, from among the plurality of grouped persons after the behavior exhibited by the first person with respect to the commodity product has been specified. Then, the information processing apparatus 10 specifies, from among a plurality of behavior types in each of which a transition of a process flow of the behaviors exhibited up to a point at which the commodity product is purchased in the inside of the store is defined, the first behavior type that is reached by the behavior exhibited by the first person with respect to the commodity product. The information processing apparatus 10 determines whether or not the behavior exhibited by the second person with respect to the commodity product satisfies the condition for the behavior that is associated with a second behavior type that is the transition destination of the first behavior type. If the condition for the behavior is satisfied, the information processing apparatus 10 associates the group to which the person belongs with the second behavior type.

As a result, the information processing apparatus 10 is able to perform the behavior analysis on the customers by merging, with a group customer, the behaviors exhibited by each of the persons belonging to the same group or the period of time needed for the respective behaviors. After the process at Step S107, the grouping process illustrated in FIG. 17 is ended.

### Effects

As described above, the information processing apparatus 10 acquires a video image in which an inside of a store in which commodity products are arranged is captured, specifies a relationship between a plurality of persons who are visiting the inside of the store by analyzing the acquired video image in which the inside of the store is captured, grouping the plurality of persons when the specified relationship between the plurality of persons satisfies a predetermined condition, specifies, by analyzing the acquired video image in which the inside of the store is captured, a behavior exhibited with respect to the commodity product by each of the plurality of grouped persons, and associate the behavior exhibited with respect to the commodity product with a group to which the person who has exhibited the behavior with respect to the commodity product belongs.

In this way, the information processing apparatus 10 performs a grouping process on the plurality of persons visiting the store, and associates the behavior exhibited by each of the person who belongs to a group with the group. As a result, the information processing apparatus 10 is able to analyze, on the basis of the associated group and each of the behaviors with more accuracy, the behavior exhibited by each of the persons who are visiting the store, in particular, the behavior exhibited by each of the plurality of grouped persons.

Furthermore, the process of specifying the relationship performed by the information processing apparatus 10 includes a process of specifying the relationship between the plurality of persons who are visiting the inside of the store by inputting the video image in which the inside of the store is captured to a machine learning model, and the machine learning model is a model that is used for Human Object Interaction Detection (HOID) and that is generated by performing machine learning such that a first class that indicates a first person and first region information that indicates a region in which the person appears, a second class that indicates a second person and second region information that indicates a region in which an object appears, and a relationship between the first class and the second class are identified.

As a result, the information processing apparatus 10 is able to analyze the behavior exhibited by each of the plurality of grouped persons with more accuracy.

Furthermore, the process of associating performed by the information processing apparatus 10 includes a process of specifying, from among a plurality of behavior types in each of which a transition of a process flow of the behaviors exhibited up to a point at which the commodity product is purchased in the inside of the store is defined, a first behavior type that is reached by the behavior exhibited with respect to the commodity product by each of the plurality of grouped persons, and associating the group to which the person who has exhibited the behavior with respect to the commodity product belongs with the specified first behavior type.

As a result, the information processing apparatus 10 is able to analyze the behavior exhibited by each of the plurality of grouped person with more accuracy.

Furthermore, the process of the specifying the behavior performed by the information processing apparatus 10 includes a process of specifying a behavior exhibited with respect to the commodity product by a first person from among the plurality of grouped persons, and a process of specifying a behavior exhibited with respect to the commodity product by a second person from among the plurality of grouped persons after the behavior exhibited with respect to the commodity product by the first person has been specified, and the process of the associating includes a process of specifying, from among a plurality of behavior types in each of which a transition of a process flow of the behaviors exhibited up to a point at which the commodity product is purchased in the inside of the store is defined, a first behavior type that is reached by the behavior exhibited with respect to the commodity product by the first person, a process of determining whether or not the behavior exhibited with respect to the commodity product by the second person satisfies a condition for a behavior associated with a second behavior type that is a transition destination of the first behavior type, and a process of associating, when it is determined that the condition for the behavior is satisfied, the group to which the person belongs with the second behavior type.

As a result, the information processing apparatus 10 is able to analyze the behavior exhibited by each of the plurality of grouped person with more accuracy.

Furthermore, the process of the grouping performed by the information processing apparatus 10 includes a process of grouping the plurality of persons when at least one of behaviors of moving in a same direction within a predetermined distance, facing each other for a predetermined period of time, receiving and passing a predetermined object, putting an object into a same basket, taking out an object from the same basket, and being present within a predetermined distance at the time at which the plurality of persons enter the store and before the plurality of persons make a payment exhibited by the plurality of persons occurs a predetermined number of times or more.

As a result, the information processing apparatus 10 is able to perform the grouping process on the plurality of persons who are visiting the store with more accuracy.

In addition, the information processing apparatus 10 determines whether each of the plurality of persons is a store clerk or a customer, and performs control, when it is determined that the person is the store clerk, such that the person is excluded from a target for grouping the plurality of persons.

As a result, the information processing apparatus 10 is able to exclude the store clerk from the process of grouping the persons that is performed to conduct a behavior analysis.

Furthermore, the process of determining whether each of the persons is the store clerk or the customer performed by the information processing apparatus 10 includes a process of determining that a first person is the store clerk, when at least one of conditions that a first person from among the plurality of persons stay in a first area in a predetermined period of time or more, the first person be present with a plurality of second persons within a predetermined distance and the plurality of second persons being different from the first person from among the plurality of persons, and the first person enter a second area is satisfied.

As a result, the information processing apparatus 10 is able to specify the store clerk with more accuracy.

### System

The flow of the processes, the control procedures, the specific names, and the information containing various kinds of data or parameters indicated in the above specification and drawings can be arbitrarily changed unless otherwise stated. Furthermore, specific examples, distributions, numerical values, and the like described in the embodiment are only examples and can be arbitrarily changed.

Furthermore, the specific shape of a separate or integrated device is not limited to the drawings. In other words, all or part of the device can be configured by functionally or physically separating or integrating any of the units in accordance with various loads or use conditions. In addition, all or any part of each of the processing functions performed by the each of the devices can be implemented by a CPU and by programs analyzed and executed by the CPU or implemented as hardware by wired logic.

### Hardware

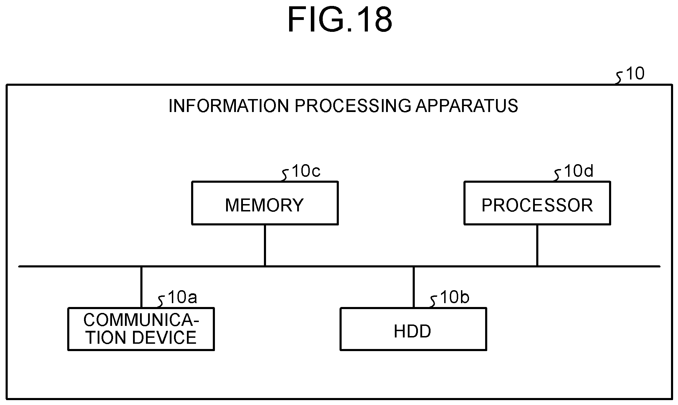

FIG. 18 is a diagram illustrating an example of a hardware configuration. As illustrated in FIG. 18, the information processing apparatus 10 includes a communication device 10a, a hard disk drive (HDD) 10b, a memory 10c, and a processor 10d. Furthermore, each of the units illustrated in FIG. 18 is connected each other via a bus or the like.

The communication device 10a is a network interface card or the like, and communicates with another server. The HDD 10b stores therein programs or the DB that operates the function illustrated in FIG. 2.

The processor 10d is a hardware circuit that operates the process that executes each of the functions described above in FIG. 2 or the like by reading the programs that execute the same process as that performed by each of the processing units illustrated in FIG. 2 from the HDD 10b or the like and loading the read programs in the memory 10c. In other words, the process executes the same function as that performed by each of the processing units included in the information processing apparatus 10. Specifically, the processor 10d reads, from the HDD 10b or the like, the programs having the same functions as those performed by the image capturing unit 21, the tracking unit 22, the skeleton detection unit 23, the motion recognition unit 24, the relationship specifying unit 25, and the like. Then, the processor 10d executes the processes that executes the same processes as those performed by the image capturing unit 21 and the like.

In this way, the information processing apparatus 10 is operated as an information processing apparatus that executes an operation control process by reading and executing the programs that execute the same process as that performed by each of the processing units illustrated in FIG. 2. Furthermore, the information processing apparatus 10 is also able to implement the same function as that described above in the embodiment by reading the programs from a recording medium by a medium reading device and executing the read programs. In addition, the programs described in another embodiment are not limited to be executed by the information processing apparatus 10. For example, the present embodiment may also be similarly used in a case in which another computer or a server executes a program or in a case in which another computer and a server cooperatively execute the program with each other.

Furthermore, the programs that execute the same process as those performed by each of the processing units illustrated in FIG. 2 can be distributed via a network, such as the Internet. Furthermore, the programs can be executed by storing the programs in a recording medium that can be read by a computer readable medium, such as a hard disk, a flexible disk (FD), a CD-ROM, a magneto-optical disk (MO), a digital versatile disk (DVD), or the like, and read the programs from the recording medium by the computer.

## Claims

1. An information processing program that causes a computer(10) to execute a process comprising:
acquiring a video image in which an inside of a store in which each commodity product is arranged is captured;(S102)
specifying a relationship between a plurality of persons who visit the inside of the store by analyzing the acquired video image in which the inside of the store is captured;(S104)
grouping the plurality of persons when the specified relationship between the plurality of persons satisfies a predetermined condition;(S105)
specifying, by analyzing the acquired video image in which the inside of the store is captured, a behavior exhibited with respect to the commodity product by each of the plurality of grouped persons; (S106) and
associating the behavior exhibited with respect to the commodity product with a group to which the person who exhibits the behavior with respect to the commodity product belongs.(S107)

2. The information processing program according to claim 1, wherein
the specifying the relationship includes specifying the relationship between the plurality of persons who visit the inside of the store by inputting the video image in which the inside of the store is captured to a machine learning model, and
the machine learning model is a model that is used for Human Object Interaction Detection (HOID) and that is generated by performing machine learning such that a first class that indicates a first person and first region information that indicates a region in which the person appears, a second class that indicates a second person and second region information that indicates a region in which an object appears, and a relationship between the first class and the second class are identified.

3. The information processing program according to claim 1, wherein
the associating includes
specifying, from among a plurality of behavior types in each of which a transition of a process flow of the behaviors exhibited up to a point at which the commodity product is purchased in the inside of the store is defined, a first behavior type that is reached by the behavior exhibited with respect to the commodity product by each of the plurality of grouped persons, and
associating the group to which the person who exhibits the behavior with respect to the commodity product belongs with the specified first behavior type.

4. The information processing program according to claim 1, wherein
the specifying the behavior includes
specifying a behavior exhibited with respect to the commodity product by a first person from among the plurality of grouped persons, and
specifying a behavior exhibited with respect to the commodity product by a second person from among the plurality of grouped persons after the behavior exhibited with respect to the commodity product by the first person has been specified, and
the associating includes
specifying, from among a plurality of behavior types in each of which a transition of a process flow of the behaviors exhibited up to a point at which the commodity product is purchased in the inside of the store is defined, a first behavior type that is reached by the behavior exhibited with respect to the commodity product by the first person,
determining whether or not the behavior exhibited with respect to the commodity product by the second person satisfies a condition for a behavior associated with a second behavior type that is a transition destination of the first behavior type, and
associating, when it is determined that the condition for the behavior is satisfied, the group to which the person belongs with the second behavior type.

5. The information processing program according to claim 1, wherein
the grouping includes grouping the plurality of persons when at least one of behaviors of
moving in a same direction within a predetermined distance,
facing each other for a predetermined period of time,
receiving and passing a predetermined object,
putting an object into a same basket,
taking out an object from the same basket, and
being present within a predetermined distance at the time at which the plurality of persons enter the store and before the plurality of persons make a payment
exhibited by the plurality of persons occurs a predetermined number of times or more.

6. The information processing program according to claim 1, wherein the process further includes:
determining whether each of the plurality of persons is a store clerk or a customer; and
performing control, when it is determined that the person is the store clerk, such that the person is excluded from a target for grouping the plurality of persons.

7. The information processing program according to claim 6, wherein
the determining whether each of the persons is the store clerk or the customer includes determining that a first person is the store clerk, when at least one of conditions that
a first person from among the plurality of persons stay in a first area in a predetermined period of time or more and the first person be present with a plurality of second persons within a predetermined distance, the plurality of second persons being different from the first person from among the plurality of persons, and
the first person enter a second area is satisfied.

8. An information processing method that causes a computer(10) to execute a process comprising:
acquiring a video image in which an inside of a store in which each commodity product is arranged is captured;(S102)
specifying a relationship between a plurality of persons who visit the inside of the store by analyzing the acquired video image in which the inside of the store is captured;(S104)
grouping the plurality of persons when the specified relationship between the plurality of persons satisfies a predetermined condition;(S105)
specifying, by analyzing the acquired video image in which the inside of the store is captured, a behavior exhibited with respect to the commodity product by each of the plurality of grouped persons; (S106) and
associating the behavior exhibited with respect to the commodity product with a group to which the person who exhibits the behavior with respect to the commodity product belongs.(S107)

9. An information processing apparatus(10) comprising:
a controller(20) configured to execute a process including:
acquiring a video image in which an inside of a store in which each commodity product is arranged is captured;(S102)
specifying a relationship between a plurality of persons who visit the inside of the store by analyzing the acquired video image in which the inside of the store is captured;(S104)
grouping the plurality of persons when the specified relationship between the plurality of persons satisfies a predetermined condition;(S105)
specifying, by analyzing the acquired video image in which the inside of the store is captured, a behavior exhibited with respect to the commodity product by each of the plurality of grouped persons; (S106) and
associating the behavior exhibited with respect to the commodity product with a group to which the person who exhibits the behavior with respect to the commodity product belongs.(S107)

10. The information processing apparatus(10) according to claim 9, wherein
the specifying the relationship includes specifying the relationship between the plurality of persons visits the inside of the store by inputting the video image in which the inside of the store is captured to a machine learning model, and
the machine learning model is a model that is used for Human Object Interaction Detection (HOID) and that is generated by performing machine learning such that a first class that indicates a first person and first region information that indicates a region in which the person appears, a second class that indicates a second person and second region information that indicates a region in which an object appears, and a relationship between the first class and the second class are identified.

11. The information processing apparatus(10) according to claim 9, wherein
the associating includes
specifying, from among a plurality of behavior types in each of which a transition of a process flow of the behaviors exhibited up to a point at which the commodity product is purchased in the inside of the store is defined, a first behavior type that is reached by the behavior exhibited with respect to the commodity product by each of the plurality of grouped persons, and
associating the group to which the person who exhibits the behavior with respect to the commodity product belongs with the specified first behavior type.

12. The information processing apparatus(10) according to claim 9, wherein
the specifying the behavior includes
specifying a behavior exhibited with respect to the commodity product by a first person from among the plurality of grouped persons, and
specifying a behavior exhibited with respect to the commodity product by a second person from among the plurality of grouped persons after the behavior exhibited with respect to the commodity product by the first person has been specified, and
the associating includes
specifying, from among a plurality of behavior types in each of which a transition of a process flow of the behaviors exhibited up to a point at which the commodity product is purchased in the inside of the store is defined, a first behavior type that is reached by the behavior exhibited with respect to the commodity product by the first person,
determining whether or not the behavior exhibited with respect to the commodity product by the second person satisfies a condition for a behavior associated with a second behavior type that is a transition destination of the first behavior type, and
associating, when it is determined that the condition for the behavior is satisfied, the group to which the person belongs with the second behavior type.
